# EUROPÄISCHE PATENTSCHRIFT

(11) **EP 1 448 652 B1**
(45) Veröffentlichungstag und Bekanntmachung des Hinweises auf die Patenterteilung: **20.04.2011**
(21) Anmeldenummer: 02774774.0
(22) Anmeldetag: 07.11.2002
(51) Int. Cl.: C08G 18/80, C09D 175/04, C09D 5/03, C08G 18/12

(54) **MIT EPSILON -CAPROLACTAM UND DIPA BZW. 1,2,4-TRIAZOL MISCHBLOCKIERTE POLYISOCYANATE, DEREN HERSTELLUNG UND VERWENDUNG**
POLYISOCYANATES THAT ARE BLOCKED BY MIXING WITH T-CAPROLACTAM AND DIPA OR 1,2,4-TRIAZOLE, THEIR PRODUCTION AND USE THEREOF
POLYISOCYANATES BLOQUES PAR MELANGE AVEC $G(E)-CAPROLACTAME ET DIPA OU 1,2,4-TRIAZOL, LEUR PREPARATION ET LEUR UTILISATION

(30) Priorität: 20.11.2001 DE 10156897
(43) Veröffentlichungstag der Anmeldung: 25.08.2004
(73) Patentinhaber: Bayer MaterialScience AG, 51368 Leverkusen (DE)
(72) Erfinder: KÖNIG, Eberhard, 51375 Leverkusen (DE); BAUMBACH, Beate, 51399 Burscheid (DE); FÜSSEL, Christian, 47918 Tönisvorst (DE)
(86) Internationale Anmeldenummer: PCT/EP2002/012429
(87) Internationale Veröffentlichungsnummer: WO 2003/044072

(56) Entgegenhaltungen:
- EP-A- 0 600 314
- EP-A- 0 829 500
- DE-A- 3 328 134
- DE-A- 19 856 968
- US-A- 4 500 696

## Beschreibung

Die Erfindung betrifft mischblockierte Polyisocyanate, deren Herstellung und Verwendung als Vernetzerkomponente für Beschichtungen und Überzüge, vorzugsweise für tiefziehbare und korrosionsbeständige Einbrennlacke, insbesondere für das Coil Coating-Verfahren.

Die Formulierung von blockierten Polyisocyanaten mit OH-haltigen Polykondensaten bzw. Polymerisaten (Polyestern bzw. Polyacrylaten) zu Bindemitteln für "einkomponentige" Einbrennlacke ist Stand der Technik. Auch der Einsatz von ε-Caprolactam, Diisopropylamin (DIPA) und 1,2,4-Triazol zur Blockierung von Isocyanatgruppen gehört zum Stand der Technik.

EP-A1-600314 beschreibt blockierte Lackpolyisocyanate, in denen mindestens zwei unterschiedliche Blockierungsmittel vorliegen, wobei das erste Diisopropylamin ist, und das zweite aus CH-aciden Estern und 1,2,4-Triazol ausgewählt wird.

Es ist heute üblich, unbeschichtete Bleche zu verformen, diese zu einer Karosserie zusammenzubauen und in einem Elektrotauchbad mit einer Grundierung zu versehen.

Ein anderer denkbarer Weg besteht darin, die Bleche nach der Herstellung mit einer geeigneten Grundierung zu versehen und den beschichteten Coil zwischenzulagern. Bei der Herstellung der Karosserie mit den zuvor beschichteten Blechen muss der Lack sämtliche Verformungen des Bleches ohne Beschädigung mitmachen.

Die Aufgabe der Erfindung bestand folglich darin, einen Coil Coating Lack mit sehr guter Verformbarkeit und gutem Korrosionsschutz zu entwickeln.

Es wurde nun gefunden, dass eine spezielle Kombination der Blockierungsmittel ε-Caprolactam, DIPA und 1,2,4-Triazol bei den damit hergestellten Einbrennlacken zu einem besonderen Effekt führt, nämlich der Tiefziehbarkeit bei Raumtemperatur und der Nachreißfestigkeit nach Alterung der damit hergestellten Überzüge.

Gegenstand der Erfindung sind mischblockierte Polyisocyanate enthaltend
A1) 40 bis 70 Äquivalent-% an überwiegend linearen NCO-Prepolymeren mit einem NCO-Gehalt von 5,0 bis 10,0 Gew.-%,
A2) 30 bis 60 Äquivalent-% eines aliphatischen Lackpolyisocyanates,
B1) 30 bis 60 Äquivalent-% an ε-Caprolactam und
B2) 40 bis 70 Äquivalent-% an Diisopropylamin oder 1,2,4-Triazol als Blockierungsmittel,
wobei sich die Mengen der Isocyanatkomponenten A1) und A2) zu 100 Äquivalent-% und die Mengen der Blockierungsmittel B1) und B2) zu 100 - 110 Äquivalent-% addieren.

Erfindungswesentlich ist, dass auf der Seite der Polyisocyanatkomponenten ein Gemisch an einem elastifizierend wirkenden NCO-Prepolymeren (A1) und einem hochverzweigten Lackpolyisocyanat (A2) und auf der Seite der Blockierungsmittel ein Gemisch an ε-Caprolactam (B1) mit den bei niedriger Temperatur abspaltenden Blockierungsmitteln Diisopropylamin oder 1,2,4-Triazol (B2) vorliegt.

Für die Herstellung der NCO-Prepolymerkomponente A1) werden in an sich bekannter Weise Diisocyanate mit Dihydroxylverbindungen und in geringer Menge auch Trihydroxylverbindungen umgesetzt. Bei den hier ausgewählten. NCO-Prepolymeren werden 100 Äquivalent-% Diisocyanat mit 40 bis 45 Äquivalent-% an Dihydroxyverbindungen und 5 bis 10 Äquivalent-% an Trihydroxyverbindungen umgesetzt. An Diisocyanaten kommen erfindungsgemäß beispielsweise 1,6-Diisocyanatohexan (HDI), 1-Isocyanato-3,3,5-trimethyl-5-isocyanatomethyl-cyclohexan (Isophorondiisocyanat, IPDI), Bis-(4-isocyanatocyclohexyl)-methan (H₁₂ MDI bzw. Desmodur W^{®}/ Bayer AG), 2,6- bzw. 2,5-Bisisocyanato-norbornan oder 1,4-Bisisocyanatomethyl-cyclohexan und 1,3- bzw. 1,4-Tetramethyl-xylylendiisocyanat aber auch aromatische Diisocyanate, wie z. B. 2,4- und 2,6-Toluylendiisocyanat (TDI) oder 4,4'- und 2,4'-Diisocyanato-diphenylmethan (MDI) in Betracht. Bevorzugt ist IPDI.

An Dihydroxyverbindungen kommen die in der PU-Chemie an sich bekannten linearen Polyester, Polycarbonate und Polyether mit einem Molekulargewichtsbereich von 3000 bis 500 in Betracht. Bevorzugt sind Adipinsäure/Neopentylglycol/Hexandiol-1,6-Polyester mit einem MG 1700 im Gemisch mit einem Polypropylenoxid-Polyether, gestartet auf Bisphenol A mit einem MG 550. Daneben können auch niedermolekulare Diole mit Molekulargewichten von 62 bis 400, wie z.B. Neopentylglycol oder Trimethylpentandiol-1,3, mitverwendet werden, um den NCO-Gehalt des NCO-Prepolymeren anzuheben.

Zur Verbesserung der Lösemittelbeständigkeit des NCO-Prepolymeren werden auch, wie oben angegeben, geringe Mengen an trifunktionellen Hydroxylverbindungen eingesetzt. Beispiele hierfür sind Trimethylolpropan bzw. Trimethylolpropan-gestartete Propylenoxidpolyether mit Molekülargewichten von 250 bis 1000. Die NCO-Prepolymere A1) sind so konzipiert, dass sie einen NCO-Gehalt von 5,0 bis 10,0 Gew.-%, aufweisen.

Für die Komponente A2) kommen die an sich bekannten Biuret-, Isocyanurat-, Allophanat-, Iminooxadiazindion (asymmetrisches Trimeres)-, Urethan- und/oder Uretdiongruppen aufweisenden Lackpolyisocyanate auf Basis von (cyclo)-aliphatischen Diisocyanaten mit einem NCO-Gehalt von 12 bis 25 Gew.-% in Betracht. Beispiele für aliphatische bzw. cycloaliphatische Diisocyanate sind 1,6-Diisocyanatohexan (HDI), 1-Isocyanato-3,3,5-trimethyl-5-isocyanatomethyl-cyclohexan (Isophorondiisocyanat, IPDI), Bis-(4-isocyanatocyclohexyl)-methan (H₁₂ MDI bzw. Desmodur W^{®}/Bayer AG), 2,6-bzw. 2,5-Bisisocyanato-norbornan oder 1,4-Bisisocyanatomethyl-cyclohexan und 1,3- bzw. 1,4-Tetramethyl-xylylendiisocyanat. Bevorzugt sind überwiegend Isocyanuratgruppen enthaltenden Polyisocyanate auf Basis von 1,6-Diisocyanatohexan, IPDI und Desmodur W^{®}.

Die Gesamt-NCO-Komponente A1) + A2) ist so aufgebaut, dass ca. 85 Gew.-% auf die flexible NCO-Prepolymerkomponente A1) und ca. 15 Gew.-% auf das hochfunktionelle Lackpolyisocyanat A2) entfallen. Bezogen auf den Gehalt an NCO-Gruppen verschiebt sich dieses Verhältnis zugunsten der Lackpolyisocyanatkomponente A2). Von dem Gesamt-NCO-Gehalt von A1) + A2) von 8,5 % steuert das NCO-Prepolymer A1) nur ca. 62 % und das Lackpolyisocyanat A2) ca. 38 % bei.

Für die Mischblockierung kommen einerseits ε-Caprolactam (B1) und andererseits 1,2,4-Triazol (B2) oder Diisopropylamin (B2) in Betracht. Bevorzugt ist ein Verhältnis der Blockierungsmittel B1 : B2 von 0,3 bis 0,5 : 0,7 bis 0,5, wobei sich B1 und B2 zu 1,0 Mol addieren, entsprechend der Blockierung von 1 Mol oder 1 Val an NCO-Gruppen.

Die Herstellung der erfindungsgemäßen blockierten Polyisocyanate erfolgt in der Weise, dass zuerst das NCO-Prepolymer (A1) hergestellt wird, wobei das Diisocyanat, z.B. IPDI, bei Raumtemperatur vorgelegt wird und die OH-Komponenten, z.B..Polyester, Polyether, Di- und Triole unter Rühren hinzugegeben werden, wobei unter Aufheizen auf 100 bis 110°C die Umsetzung der überschüssigen NCO-Gruppen mit den OH-Komponenten in Gang gesetzt wird und, wenn der kalkulierte NCO-Gehalt erreicht bzw. leicht unterschritten ist, die Umsetzung beendet wird und das hergestellte NCO-Prepolymer im nächsten Schritt mit Lösemittel verdünnt wird, z.B. mit Solventnaphtha 100 oder 1-Methoxy-propylacetat, und mit dem Lackpolyisocyanat A2), z. B. einem HDI-Trimerisat, versetzt wird, wobei die Gesamt-NCO-Komponente A1) + A2) vorliegt und für die Mischblockierung zuerst die teilweise Blockierung mit ε-Caprolactam (B1) bei 100 bis 110°C vorgenommen wird bis der kalkulierte NCO-Gehalt erreicht ist und anschließend entweder mit 1,2,4-Triazol oder Diisopropylamin der verbleibende Gehalt an NCO-Gruppen abreagiert wird.

Die Umsetzung mit 1,2,4-Triazol ist endotherm und erfordert eine Umsetzungstemperatur von ca. 100°C. Mit Diisopropylamin dagegen verläuft die Reaktion exotherm, so dass hier nur 40 bis 80°C zur Vervollständigung der Umsetzung notwendig sind. Nach vollständiger Blockierung der NCO-Gruppen sind die erfindungsgemäßen blockierten Polyisocyanate anwendungsfertig und können auch mit hydroxylgruppenhaltigen Lösemitteln, z. B. Isobutanol oder Butylglycol, auf Verarbeitungsviskosität verdünnt werden.

Die erfindungsgemäßen mischblockierten Polyisocyanate werden zur Herstellung von Überzügen auf Substrate aus Holz, Metall, Glas, Keramik und Kunststoffen verwendet. Vorzugsweise werden sie zur Herstellung von Grundierungen für Coil-Coating Beschichtungen verwendet.

Die mit den erfindungsgemäßen mischblockierten Polyisocyanaten z.B. herstellbaren Coil Coating-Grundierungen besitzen neben guter Korrosionsbeständigkeit (Salzsprühtest) vor allem Flexibilität und außerordentliches Haftungsvermögen, was sich im Tiefziehvermögen ohne Beschädigung von derart beschichteten Blechen ausdrückt. Da die bevorzugte Ausführungsform der erfmdungsgemäßen blockierten Polyisocyanate aliphatischen Charakter hat, also nur aliphatische Polyisocyanate enthält, können die grundierten Coils vor der Weiterverarbeitung auch im Freien gelagert werden, ohne dass die Grundierung durch die sogenannte Kreidung, also durch Licht, zersetzt wird. Mit solcherart grundierten Blechen kann beispielsweise im Automobilbau die kathodische Tauchlackierung (KTL) eingespart werden.

### Beispiele

### Beispiel 1 (erfindungsgemäß)

Es wird ein mischblockiertes Polyisocyanat beschrieben. Dieses ist zusammengesetzt aus 0,625 Äquivalent-% der NCO-Prepolymerkomponente A1), 0,375 Äquivalent-% der Lackpolyisocyanatkomponente A2) sowie 0,375 Äquivalent-% des Blockierungsmittels ε-Caprolactam (B1) und 0,625 Äquivalent-% an 1,2,4-Triazol (B2).

### Ansatz:

### Komponente A1)

| | |
|---|---|
| 340,0 g (0,4 Val) | eines Adipinsäure/Hexandiol-1,6, Neopentylglycol-Polyesters mit der OH-Zahl 66 |
| 82,5 g (0,3 Val) | eines auf Bisphenol A gestarteten Polypropylenoxid-polyethers mit der OH-Zahl 204 |
| 10,4 g (0,2 Val) | Neopenthylglycol, M 104 |
| 4,5 g (0,1 Val) | Trimethylolpropan, M 134 |
| 222,0 g (2,0 Val) | 1-Isocyanato-3,3,5-trimethyl-5-isocyanatomethyl-cyclohexan (Isophorondiisocyanat, IPDI) |
| 659,4 g (1,0 Val) | IPDI-Prepolymer |
| | NCO-Gehalt: Ber. 6,36 % Gef. 6,1 % |

### Komponente A2)

| | |
|---|---|
| 118,0 g (0,6 Val) | eines isocyanurathaltigen Lackpolyisocyantes auf Basis von 1,6-Diisocyanatohexan (HDI) mit einem NCO-Geahlt von 21,4 %, einer Viskosität bei 23°C von ca. 3000 mPas und einer Funktionalität von ca. 3,5 |
| 392,0 g | Solventnaphta 100 |

### Komponente B1)

| | |
|---|---|
| 67,8 g (0,6 Val) | ε-Caprolactam |

### Komponente B2)

| | | |
|---|---|---|
| 69,0 g (1,0 Val) | 1,2,4-Triazol | |
| 1306,2 g (1,6 Val) | blockierte NCO-Gruppen | |
| | | |
| | Festkörpergehalt: | Ber. 70,0 % |
| | Viskosität bei 23 °C: | ca. 5500 mPas |
| | blockierter NCO-Gehalt: | Ber. 5,1 % |
| | 1 Val block. NCO-Gruppen: | Ber. 816,0 g |

In dem folgenden Lackbeispiel wird dieses blockierte Polyisocyanat mit dem verzweigten Lackpolyester Desmophen^{®} 690 (70 %ig gelöst in 1-Methoxypropylacetat-2, OH-Gehalt der Lieferform 1,4 %, 1 Val OH-Gruppen = 1214 g Desmophen^{®} 690, Bayer AG) zum Einkomponenten Coil Coatings Primer im Verhältnis NCO:OH = 1:1, wie folgt, kombiniert:

### Bindemittelkombination

1 Val block. NCO-Gruppen = 816 g; reduzierte Menge : 21,7 g
1 Val OH/ Desmophen^{®} 690 = 1214 g; reduzierte Menge : 32,2 g

### Durchführung:

IPDI wird vorgelegt und die flüssigen (geschmolzenen) OH-Komponenten werden bei Raumtemperatur hinzugegeben. Unter Rühren wird die Innentemperatur in Stufen auf 110°C gebracht. Die Reaktionsmischung wird. ca. 4 Stunden bei dieser Temperatur gerührt, bis der berechnete NCO-Gehalt von 6,3 % knapp unterschritten ist. Danach werden nacheinander das HDI-Trimerisat, Solventnaphta 100 und ε-Caprolactam hinzugegeben. Diese Mischung wird ca. 1 Stunde bei 110°C umgesetzt bis der berechnete NCO-Gehalt von 3,3 % erreicht ist. Man fügt 1,2,4-Triazol hinzu und rührt für weitere 3 Stunden bei 110°C nach, bis IR-spektroskopisch kein NCO-Gehalt mehr nachweisbar ist. Man erhält eine fast farblose Lösung mit den eingangs genannten Kennzeichen.

### Beispiel 2 (erfindungsgemäß)

Dieses blockierte Polyisocyanat besteht zu 0,625 Äquivalent-% aus der flexiblen NCO-Komponente A1) 0,375 Äquivalent-% aus der verzweigten NCO-Komponente A2) sowie aus 0,5 Äquivalent-% ε-Caprolaetam (Komponente B1) und 0,5 Äquivalent-% Diisopropylamin (Komponente B2).

### Ansatz:

| | | | |
|---|---|---|---|
| **Komponente A1)** | 659,4 g (1,0 Val) | IPDI-Prepolymer gemäß Beispiel 1) | |
| **Komponente A2)** | 118,0 g (0,6 Val) | des HDI-Trimerisates gemäß Beispiel 1) | |
| | 204,0 g | Solventnäphta 100 | |
| | 204,0 g | 1-Methoxy-propylacetat-2 | |
| **Komponente B1)** | 90,4 g (0,8 Val) | ε-Caprolactam, | |
| **Komponente B1)** | 80,8 g (0,8 Val) | Diisopropylamin | |
| | **1356,6 g (1,6 Val)** | **blockierte NCO-Gruppen** | |
| | | | |
| | Festkörpergehalt: | | Ber. 70,0 % |
| | Viskosität bei 23°C: | | ca. 4000 mPas |
| | blockierter NCO-Gehalt: | | Ber. 4,9 % |
| | 1 Val block. NCO-Gruppen: | | Ber. 848,0 g |

### Durchführung:

Das IPDI-Prepolymer wird, wie in Beispiel 1 beschrieben, hergestellt. Danach werden Methoxypropylacetat, HDI-Trimerisat und ε-Caprolactam hinzugefügt. Bei 110°C wird ca. 1 Stunde gerührt, bis der NCO-Gehalt der Reaktionsmischung 3,1 % erreicht hat. Dann lässt man auf 70 bis 80°C abkühlen und gibt portionsweise die Mischung aus Diisopropylamin und Solventnaphta 100 hinzu. Diese Zugabe verläuft leicht exotherm. Man hält die Temperatur bei 80°C und findet ca. 30 Minuten nach der Diisopropylaminzugabe keinen NCO-Gehalt mehr (IR-spektroskopisch). Man erhält eine klare, farblose Lösung mit den oben angegebenen Kennzeichen.

### Beispiel 3 (Vergleich)

Dieses monoblockierte Polyisocyanat ist in Bezug auf die Isocyanatkomponenten A1) und A2) mit Beispiel 1 identisch. Als Blockierungsmittel wird nur ε-Caprolactam eingesetzt.

Die 70 %ige Lösung dieses blockierten Polyisocyanates hat ein NCO-Äquivalent-% von 856 g.

### Beispiel 4 (Vergleich)

Dieses monoblockierte Polyisocyanat ist in Bezug auf die Polyisocyanatkomponenten A1) und A2) mit Beispiel 1 identisch. Als Blockierungsmittel wird nur Diisopropylamin eingesetzt.

Die 70 %ige Lösung dieses blockierten Polyisocyanates hat ein NCO-Äquivalent von 839 g.

### Beispiel 5 (Vergleich)

Es wurde versucht, mit den Polyisocyanatkomponenten A1) und A2) gemäß Beispiel 1 ein ausschließlich nur mit 1,2,4-Triazol blockiertes Polyisocyanat herzustellen. Diese 70 %ige Lösung des blockierten Polyisocyanates war trüb. Nach kurzer Lagerzeit setzte Kristallisation ein. Somit war dieses blockierte Polyisocyanat als Vernetzer für Coil Coating-Lacke unbrauchbar.

### Beispiel 6 (Anwendungsbeispiel)

Es werden der Lackaufbau und die Eigenschaften beschrieben.

### A) Zusammensetzung der 1K-PU Coil Coating Grundierungen für Stahl und Aluminium, chromatfrei (Angaben in Gew.-%)

| | **Lack 1** | **Lack 2** | **Lack 3 (Vergleich)** | **Lack 4 (Vergleich)** |
|---|---|---|---|---|
| Desmophen^{®} 690, verzweigter Hydroxylpolyester, 70 % in Methoxypropylacetat, 1 Val OH = 1214 g, Bayer AG | 32,2 | 32,2 | 32,2 | 32,2 |
| Vernetzer gemäß: | | | | |
| Beispiel 1 | 21,7 | - | - | - |
| Beispiel 2 | - | 22,5 | - | - |
| Beispiel 3 | - | - | 22,7 | - |
| Beispiel 4 | - | - | - | 22,3 |
| Bindemittel | 53,9 | 54,7 | 54,9 | 54,5 |
| ^{®}Tronox R-KB-2, Weißpigment, Kerr Mc Gee, Germany | 3,1 | 3,1 | 3,1 | 3,1 |
| ^{®}Shieldex C 303, Antikorrosionspigment, Grace, USA | 10,3 | 10,3 | 10,3 | 10,3 |
| ^{®}Micro Talc AT-1, Haftungsvermittler, Omga, Germany | 3,1 | 3,1 | 3,1 | 3,1 |
| ^{®}Acronal 4 F, 50 % in Solvent-naphta 200, Verlaufinittel, BASF | 1,1 | 1,1 | 1,1 | 1,1 |
| ^{®}Dibutylzinndilaurat, 10 % in Solventnaphta 200, Air Products, USA | 1,8 | 1,8 | 1,8 | 1,8 |
| ^{®}Solventnaphta 200 | 26,7 | 25,9 | 25,7 | 26,1 |
| | **100,0** | **100,0** | **100,0** | **100,0** |

Die oben aufgeführten Lackkomponenten werden im Scandex Mischer angerieben und auf phosphatierte Stahlprüfbleche aufgerakelt (Trockenschichtdicke ca. 20 µm). Danach werden diese Bleche im Aalborgofen (350°C) während 38 sec eingebrannt, was einer peak metal temperature (PMT) von 232°C entspricht.

### B) Lackeigenschaften der obigen Grundierungen

Da diese Grundierungen nachträglich mit dem Blech verformt und überlackiert werden, wird bei der folgenden Ausprüfung ganz besonderer Wert auf die Haftung, ersichtlich im T-Bend Test, der Nachreißfestigkeit nach Alterung bei 30' 160°C und der Tiefziehfähigkeit, gelegt.

| **Prüfungen** | **Ergebnisse** | | | |
|---|---|---|---|---|
| | **Lack 1** | **Lack 2** | **Lack 3 (Vergleich)** | **Lack 4 (Vergleich)** |
| Pendelhärte (König) [sec] | 123 | 103 | 80 | 112 |
| Glanz n. Gardener 60°, analog ECCA-T2¹⁾ | 40 | 52 | 42 | 56 |
| Methylethylketon (MEK)-Wischtest, Doppelhübe, ECCA-T11¹⁾ und DIN EN 12720 | 100 | 95 | 54 | 100 |
| T-Bend Test (Risse) bester Wert = 0 | R 0,5 | R 0,5 | R 2,0 | R 1,5 |
| T-Bend Test (Haftung) bester Wert = 0 | H 0 | H 0,5 | H 2,5 | H 1,5 |
| Nachreißfestigkeit nach dem | R 1,0 | R 1,5 | R 4 | R 3 |
| T-Bend Test (30' 160°C) | H 0 | H 0 | H 2 | H 1 |
| Tiefziehen bei Raumtemperatur zu einem Näpfchen | i. O. | i. O. | nicht i. O. | nicht i. O. |
| Nachreißfestigkeit nach dem Tiefziehen zu einen Näpfchen (30' 160 °C) | i. O. | i. O. | - | - |

| | | | | |
|---|---|---|---|---|
| ¹⁾ ECCA = European Coil Coating Association | | | | |

Im Gegensatz zu den Vergleichslacken besitzen die Lacke 1 und 2 mit den erfindungsgemäßen blockierten Polyisocyanaten die Tiefziehfähigkeit bei Raumtemperatur zu einem Näpfchen. Auch nach Alterung dieser Näpfchen bei 30' 160°C ist keine Ablösung der Lacke festzustellen, d.h. diese entscheidende Prüfung für die Überlackierbarkeit wird nur von den erfindungsgemäßen Grundierungen bestanden.

Die Grundierungen 1 und 2 wurden außerdem noch einer Steinschlagprüfung (gemäß dem Verband der Automobilindustrie - VDA) unterworfen, wobei auf die Grundierungen noch ein handelsüblicher Füller und Decklack appliziert wurden. Füller und Decklack wurden gesondert eingebrannt. Beide Einbrennvorgänge hält der Lack ohne Beschädigung, d. h. Ablösung, aus.

| **Prüfungen** | **Ergebnisse** | | |
|---|---|---|---|
| | **Lack 1** | **Lack 2** | **KTL (Vergleich)** |
| Haftung | 1 | 1-2 | 1 - 2 |
| Füller/Grundierung | | | |
| bester Wert = 0 | | | |
| schlechtester Wert = 5 | | | |
| Durchschläge | 1 | 1 | 1 |
| Aspekt | 0 -1 | 1 | 1 - 2 |
| Salzsprühtest nach 120 Stunden | 1- 2 | 2 | 2 |

Die mit den erfindungsgemäßen blockierten Polyisocyanaten hergestellten Lacke 1 und 2 schneiden bei einem Steinschlag-Vergleichstest mit einer üblichen KTL gleich ab.

## Patentansprüche

1. Mischblockierte Polyisocyanate enthaltend
A1) 40 - 70 Äquivalent-% an überwiegend linearen NCO-Prepolymeren mit einem NCO-Gehalt von 5,0 -10,0 Gew.-%,
A2) 30 - 60 Äquivalent-% eines aliphatischen Lackpolyisocyanates,
B1) 30 - 60 Äquivalent-% an ε-Caprolactam und
B2) 40 - 70 Äquivalent-% an Diisopropylamin oder 1,2,4-Triazol als Blockierungsmittel,
wobei sich die Mengen der Isocyanatkomponenten A1), und A2) zu 100 Äquivalent-% und die Mengen der Blockierungsmittel B1) und B2) zu 100 bis 110 Äquivalent-% addieren.

2. Verfahren zur Erstellung von mischblockierten Polyisocyanaten gemäß Anspruch 1, **dadurch gekennzeichnet, dass** zuerst das NCO-Prepolymer (A1) hergestellt wird, wobei das Diisocyanat bei Raumtemperatur vorgelegt wird und die OH-Komponenten, z.B. Polyester, Polyether, Di- und Triole unter Rühren hinzugegeben wird, wobei unter Aufheizen auf 100 bis 110°C die Umsetzung der überschüssigen NCO-Gruppen mit den OH-Komponenten in Gang gesetzt wird und wenn der kalkulierte NCO-Gehalt erreicht bzw. leicht unterschritten ist, die Umsetzung beendet wird und das hergestellte NCO-Prepolymer im nächsten Schritt mit Lösemittel verdünnt wird und mit dem Lackpolyisocyanat A2) versetzt wird, wobei die Gesamt-NCO-Komponente A1) + A2) vorliegt und für die Mischblockierung zuerst die teilweise Blockierung mit ε-Caprolactam (B1) bei 100 bis 110°C vorgenommen wird bis der kalkulierte NCO-Gehalt erreicht ist und anschließend entweder mit 1,2,4-Triazol oder Diisopropylamin der verbleibende Gehalt an NCO-Gruppen abreagiert wird.

3. Verwendung der mischblockierten Polyisocyante gemäß Anspruch 1 zur Herstellung von Überzügen auf Substraten aus Holz, Metall, Glas, Keramik und Kunststoffen.

4. Verwendung von mischblockierten Polyisocyanaten gemäß Anspruch 1 zur Herstellung von Coil Coating Grundierungen.

## Claims

1. Hybrid blocked polyisocyanates comprising:
A1) 40 to 70 equivalent % of predominantly linear NCO prepolymers having an NCO content of 5.0 to 10.0 wt. %,
A2) 30 to 60 equivalent % of an aliphatic lacquer polyisocyanate,
B1) 30 to 60 equivalent % of ε-caprolactam and
B2) 40 to 70 equivalent % of diisopropylamine or 1,2,4-triazole as blocking agents,
wherein the equivalent percents of isocyanate components A1) and A2) add up to 100%, and the equivalent percents of blocking agents B1) and B2) add up to 100 to 110%.

2. Process for the preparation of hybrid blocked Polyisocyanates according to Claim 1, **characterized in that** the NCO prepolymer (A1) is prepared first by adding an initial charge of the diisocyanate at room temperature and then adding the OH components, for example polyesters, polyethers, diols and triols, with stirring, the reaction of the excess NCO groups with the OH components being initiated by heating to 100 to 110°C, and when the calculated NCO content is reached or almost reached, the reaction is terminated and in the next step the NCO prepolymer is diluted with solvent, and lacquer polyisocyanate A2) is added to form the total NCO component A1)-A2) and for the hybrid blocking, first the partial blocking with ε-caprolactam (B1) is undertaken at 100 to 110°C until the calculated NCO content is reached, and then the remaining NCO groups are reacted with either 1,2,4-triaxole or diisopropylamine.

3. Use of the hybrid blocked polyisocyanates according to Claim 1 for producing coatings on substrates made of wood, metal, glass, ceramic and plastics.

4. Use of hybrid blocked polyisocyanates according to Claim 1 for producing coil coating primers.

## Revendications

1. Polyisocyanates à blocage mixte, contenant
A1) 40 - 70 % en équivalents de prépolymères à groupes NCO, essentiellement linéaires, ayant une teneur en NCO de 5,0 à 10,0 % en poids,
A2) 30 - 60 % en équivalents d'un polyisocyanate aliphatique pour peintures,
B1) 30 - 60 % en équivalents d'ε-caprolactame et
B2) 40 - 70 % en équivalents de diisopropylamine ou de 1,2,4-triazole en tant qu'agents de blocage,
les quantités des composants isocyanate A1) et A2) faisant au total 100 % en équivalents et les quantités des agents de blocage B1) et B2) faisant au total 100 à 110 % en équivalents.

2. Procédé pour la préparation de Polyisocyanates à blocage mixte selon la revendication 1, **caractérisé en ce qu'**on prépare d'abord le prépolymère à groupes NCO (A1), en disposant au préalable le diisocyanate à la température ambiante et en ajoutant, sous agitation, les composants OH, par exemple des polyesters, polyéthers, diols et triols, puis en déclenchant par chauffage à une température de 100 à 110°C la réaction des groupes NCO en excès avec les composants OH et lorsque la teneur calculée en NCO est atteinte ou légèrement dépassé, en mettant fin à la réaction et dans l'étape suivante on dilue avec un solvant le prépolymère à groupes NCO produit et on y ajoute le polyisocyanate pour peintures A2), de sorte que le composant à groupes NCO A1) + A2) est présent en totalité et pour le blocage mixte on effectue d'abord le blocage partiel avec de l'ε-caprolactame (B1) à une température de 100 à 110 °C, jusqu'à ce que la teneur en NCO calculée soit attente et ensuite on fait réagir complètement la teneur restante en groupes NCO avec soit du 1,2,4-triazole, soit de la diisopropylamine.

3. Utilisation des polyisocyanates à blocage mixte selon la revendication 1, pour la production de revêtements sur des supports en bois, métal, verre, céramique et matières plastiques.

4. Utilisation des polyisocyanates à blocage mixte selon la revendication 1, pour la production de primaire pour peinturage de rubans continus (Coil Coating).
